# EUROPEAN PATENT APPLICATION

(11) **EP 1 365 002 A1**
(43) Date of publication of application: **26.11.2003**
(21) Application number: 02447092.4
(22) Date of filing: 22.05.2002
(51) Int. Cl.: C09K 19/34

(54) **Liquid crystalline derivatives for electronic devices**

(71) Applicant: UNIVERSITE LIBRE DE BRUXELLES, B-1050 Bruxelles (BE)
(72) Inventor: Tant, Julien, 1080 Brussels (BE); Geerts, Yves, 1160 Brussels (BE); Dalle Vedove, Walter, 1050 Brussels (BE); Kestemont, Gael, B-1050 Brussels (BE)
(74) Representative: Van Malderen, Michel

(57) **Abstract**

The present invention is related to a device comprising a liquid crystalline poly-aza-trinaphthylene derivatives of the structure I: 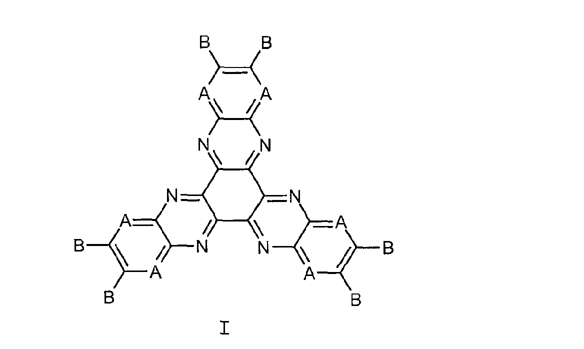 wherein A is C-R or N (nitrogen), and B is R₁
R is hydrogen (H) or deuterium (D)
halogen (F, Cl, Br or I)
nitro (NO₂)
nitryl (CN)
R₁ is ether (O-R₂)
ester (O-CO- R₂ or CO-O- R₂)
alkyl (R₂)
alkyne (C C- R₂)
phenyl (mono, di or tri substituted by above-mentioned R₂ groups)
with R₂ being an alkyl, branched or not, an oligoether, or a combination of both, of 5 to 20 carbon atoms.

## Description

### Field of the invention

The present invention is related to new compounds of liquid crystalline poly-aza-trinaphthylene derivatives and to a method for preparing same.

### State of the art

Liquid crystalline discotic materials are known for their ability to self-arrange in columns forming a quasi-one dimensional semi-conductor.

The use of columnar discotic phases in electronic devices has already been disclosed in the documents US 6281430 and WO 963608. It is known that the long range conductivity strongly depends on the organisation of the molecules in the used material.

Otha et al. (J. Mater. Chem. (2001), *11,* 423) showed that large highly ordered areas can be obtained by a slow cooling down of the material from the isotropic phase. Materials having a clearing point below the decomposition temperature are then highly desirable.

### Aims of the invention

The present invention aims to provide new molecules of poly-aza-trinaphthylene derivatives and preparation methods thereof.

In particular, the present invention provides derivatives of 5,6,11,12,17,18-hexaaza-trinaphthylene (HATNA) and 1,4,5,6,7,10,11,12,13,16,17,18-dodecaazatrinaphthylene (DATNA) with specific fonctionalisation, optimised in ordered to obtain the needed properties in electronic devices, and preparation methods thereof.

### Summary of the invention

The present invention relates to a device, comprising a liquid crystalline poly-aza-trinaphthylene derivatives of the structure I: 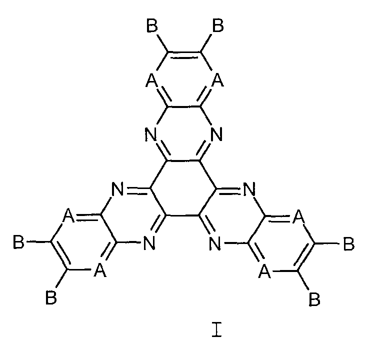 wherein A is C-R or N (nitrogen), and B is R₁
- R is: hydrogen (H) or deuterium (D)
halogen (F, Cl, Br or I)
nitro (NO₂)
nitryl (CN)
- R₁ is: ether (O-R₂)
ester (O-CO- R₂ or CO-O- R₂)
alkyl (R₂)
alkyne (C C- R₂)
phenyl (mono, di or tri substituted by above-mentioned R₂ groups)
with R₂ being an alkyl, branched or not, an oligoether, or a combination of both, of 5 to 20 carbon atoms.

In a first embodiment of the present invention, A is N (nitrogen) and B is an ester (CO-O-R₂) in the compound according to the present invention.

In a second embodiment of the present invention, A is N (nitrogen) and B is an alkyl (R₂) in the compound according the invention.

In one particular embodiment of the compound according to the invention, A is C-R, R is H (hydrogen) and B is an ether (O-R₂).

In another embodiment of the compound according to the invention, A is C-R, R is H (hydrogen) and B is an alkyl (R₂).

In an additional embodiment of the present invention, the compound according to the invention, A is C-R, with R = H (hydrogen) and B is an ester (O-CO-R₂ or CO-O-R₂).

More advantageously, in the compound according to the invention, A is C-R, with R is an halogen atom and B is an ether (O-R₂).

In another aspect according to the invention, A is preferably C-R, with R is an halogen atom and B is preferably an alkyl (R₂).

Finally, in the compound according to the invention, A is C-R, with R is an halogen atom and B is an ester (O-CO-R₂ or CO-O-R₂).

### Short description of the drawings

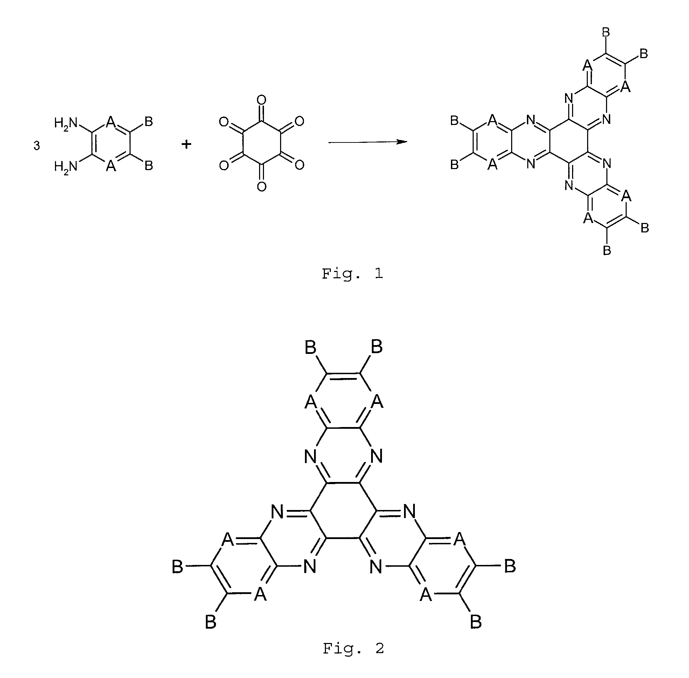

Fig.1 represents the condensation step between the ortho-diamino molecule and the hexaceto cyclohexane to obtain trinaphthylene derivates.

Fig.2 represents some preferred molecules of the present invention.
Where A is C-R ; R is H or Br ; B is R₁; R₁ is O-R₂ or R₂ R₂ is n-C₁₄H₂₉ or n-C₁₆H₃₃

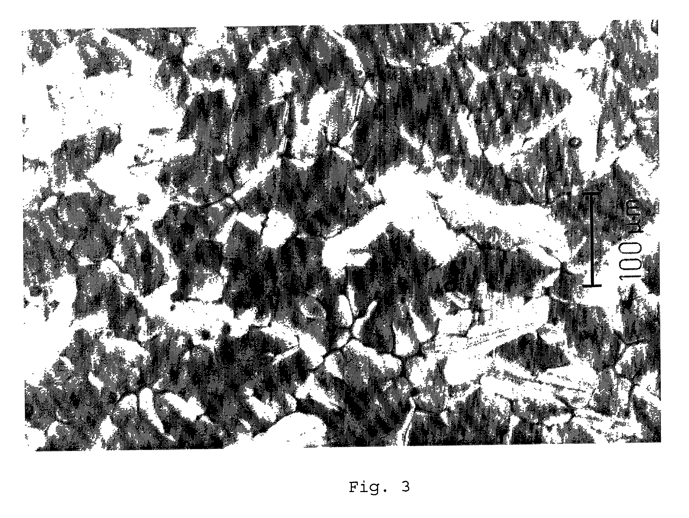

Fig.3 shows the liquid cristalline texture of the molecule of the example 1 under cross-polarized microscope, at 183°C.

### Detailed description of the invention

The invention concerns 5,6,11,12,17,18-hexaaza-trinaphthylene (HATNA) and 1,4,5,6,7,10,11,12,13,16,17,18-dodecaaza-trinaphthylene (DATNA) derivatives and preparation processes for each.

Proceeding from reacting hexaketocyclohexane octahydrate with the corresponding benzene-1,2-diamine or pyrazine-2,3-diamine derivatives. Included in the invention for these compounds are uses as organic semiconductors in electronic devices.

The present invention discloses poly-aza-trinaphthylene derivatives of the structure I 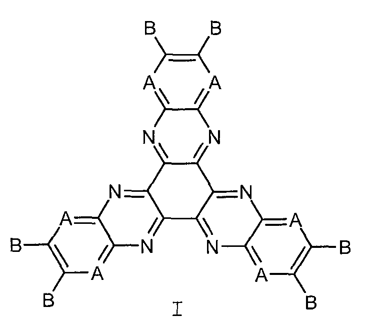 where A is C-R(HATNA), or N (nitrogen) (DATNA), and B is R₁
- R is: hydrogen (H) or deuterium (D)
halogen (F, Cl, Br or I)
nitro (NO₂)
nitryl (CN)
- R₁ is: ether (O-R₂)
ester (O-CO- R₂ or CO-O- R₂)
alkyl (R₂)
phenyl (mono, di or tri substituted by above-mentioned R₁ groups)
alkyne (C C- R₂)
, with R₂ being a alkyl, branched or not, an oligoether, or a combination of both, of 5 to 20 carbon atoms.

The preparation of HATNA or DATNA derivatives, process comprises:
a) reacting hexaketocyclohexane octahydrate in an alcohol (methanol or ethanol) with a catalytic quantity (5 to 20 % by volume) of acid (acetic, sulphuric or chloridric), with substituted benzene-1,2-diamine or pyrazine-2,3-diamine which is present in at least three times the molar amount of hexaketocyclohexane octahydrate, by heating the mix up to a temperature of at least 60°C; and
b) separating the HATNA or DATNA from a resulting reaction medium comprising said compound, remaining solvents, unused reactants and by-product.

Preferably, the process employs the benzene-1,2-diamine or pyrazine-2,3-diamine derivative in an amount of 1 to 4 times the theoretical molar amount to react completely the hexaketocyclohexane octahydrate. Preferably also, the process employs dry solvents (containing less than 5 % by volume of water) and heated to reflux temperature.

### Description of a preferred embodiment of the invention

While commercially available materials may be used, another possibility is to prepare his own starting materials.

For preparing the reactifs used in the present invention, one of the possible ways is to use precursors of hexaketocyclohexane octahydrate and functionalised benzene-1,2-diamine or pyrazine-2,3-diamine.

For the use in the illustrative examples of the present invention 4,5-dialkoxy-2,3-phenylenediamines were prepared in a three-step reaction from pyrocatechol.

Etherification of pyrocatechol proceeds as described previously [a) Strzelecka, H.; Jallabert, C.; Veber, M.; *Mol. Cryst. Liq. Cryst. Inc. Nonlin. Opt.,* (1988), 156, 347; b) WO 01/62082], then the dinitration proceeds as described previously ( Forget, S.; Veber, M.; Strzelecka, H.; *Mol. Cryst. Liq. Cryst.,* (1995), 258, 263), followed by a reduction to the desired 4,5-dialkoxy-2,3-phenylenediamine proceeds as described previously (Forget, S.; Veber, M.; *New J. Chem*., (1997), 21, 409). 4,5-dialkyl-2,3-phenylenediamines can be obtained using a previously described procedure (Hui-Chang, Z.; Wei-Sheng, H.; Pu, L.; *J. Org. Chem*., (2001), 66, 481).

To prepare HATNA or DATNA compounds, according to the present invention hexaketocyclohexane octahydrate reacts with an excess of functionalised benzene-1,2-diamine or pyrazine-2,3-diamine in refluxing ethanol - acetic acid mixture to produce HATNA or DATNA derivatives in yields higher than 10%.

The new molecules are then isolated by extracting the reaction mixture (dichloromethane - water), followed by column chromatography on silica gel.

The molecules, soluble in common organic solvents, are characterised by ¹H NMR, mass spectrometry, and absorption spectroscopy. Their thermotropic behaviour is characterised by cross-polarised microscopy.

One embodiment of the present invention is illustrated in example 1.

### Example 1:

### 2,3,8,9,14,15-Hexadecyloxy-5,6,11,12,17,18-hexaazatrinaphthylene

A is C-R ; R is H ; B is R₁ is O-R₂ ; R₂ is n-C₁₀H₂₁ Aqueous hydrazine (1.2 g; 24 mmol) is cautiously added to a mixture of 1,2-Didecyloxy-4,5-dinitro-benzene (400 mg; 0.83 mmol), 10%-palladium on activated charcoal (120 mg), and ethanol (20 mL). The mixture is refluxed for 3 hours under an inert atmosphere. The colourless solution is then filtered on celite, under nitrogen, in order to eliminate the catalyst residue. Hexaketocyclohexane octahydrate (85 mg; 0.27 mmol) and acetic acid (20 mL) are then added to the resulting solution. The reaction mixture is refluxed 15 hours. After cooling to room temperature, this mixture is extracted with dichloromethane, washed with water, and dried over magnesium sulphate, filtered and evaporated. The residue is then purified by column chromatography (silica gel, dichloromethane - ethyl acetate = 95:5; Rf = 0.8 - 0.85). The product is obtained as a yellow powder. Yield: 25%. Clearing point: 191 - 202 °C.
¹H-NMR (CDCl₃, 300MHz) = 7.85 (s, 6H), 4.30 (t, J₁ = 6 Hz, 12H), 2.00 (q, J₁ = 6 Hz, 12H), 1.54 (m, 12H), 1.41-1.25 (m, 96H), 0.91 (t, J₁ = 6 Hz, 18H).

## Claims

1. A device, comprising a liquid crystalline poly-aza-trinaphthylene derivatives of the structure I: 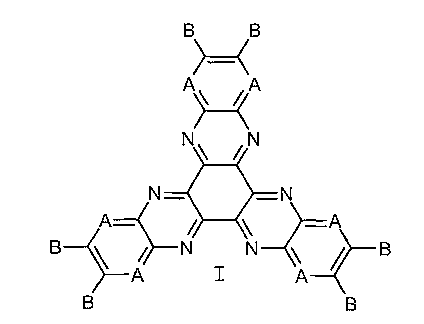 wherein A is C-R or N (nitrogen), and B is R₁
R is hydrogen (H) or deuterium (D)
halogen (F, Cl, Br or I)
nitro (NO₂)
nitryl (CN)
R₁ is ether (O-R₂)
ester (O-CO- R₂ or CO-O- R₂)
alkyl (R₂)
alkyne (C C- R₂)
phenyl (mono, di or tri substituted by above-mentioned R₂ groups)
with R₂ being an alkyl, branched or not, an oligoether, or a combination of both, of 5 to 20 carbon atoms.

2. A compound according to claim 1, wherein A is N (nitrogen) and B is an ester (CO-O-R₂).

3. A compound according to claim 1, wherein A is N (nitrogen) and B is an alkyl (R₂).

4. A compound according to claim 1, wherein A is C-R, R is H (hydrogen) and B is an ether (O-R₂).

5. A compound according to claim 1, wherein A is C-R, R is H (hydrogen) and B is an alkyl (R₂).

6. A compound according to claim 1, wherein A is C-R, R is H (hydrogen) and B is an ester (O-CO-R₂ or CO-O-R₂).

7. A compound according to claim 1, wherein A is C-R, R is an halogen atom and B is an ether (O-R₂).

8. A compound according to claim 1, wherein A is C-R, R is an halogen atom and B is an alkyl (R₂).

9. A compound according to claim 1, wherein A is C-R, R is an halogen atom and B is an ester (O-CO-R₂ or CO-O-R₂).

10. Use of poly-aza-trinaphthylene derivatives as in any of the previous claims for applications in the area of field effect transistors, photovoltaic devices and devices comprising liquid crystals.
